# EUROPÄISCHE PATENTSCHRIFT

(11) **EP 0 597 455 B1**
(45) Veröffentlichungstag und Bekanntmachung des Hinweises auf die Patenterteilung: **05.06.1996**
(21) Anmeldenummer: 93118175.4
(22) Anmeldetag: 10.11.1993
(51) Int. Cl.: B65G 17/34

(54) **Kettenglied für eine Scharnierbandkette als Förderkette**
Chain link for slat band conveyor chain
Maillon pour chaîne pour convoyeur à charnières

(30) Priorität: 11.11.1992 DE 9215360 U
(43) Veröffentlichungstag der Anmeldung: 18.05.1994
(73) Patentinhaber: DIEHL GMBH & CO., D-90478 Nürnberg (DE)
(72) Erfinder: Theisgen, Peter, D-54584 Jünkerath (DE); Haberland, Norbert, Dr., D-53881 Euskirchen (DE); Pepping, Karl-Heinz, Dipl.-Ing., D-53937 Schleiden (DE)

(56) Entgegenhaltungen:
- DE-A- 3 939 083
- DE-U- 9 007 192
- US-A- 2 792 928
- DATABASE WPI Week 9029, Derwent Publications Ltd., London, GB; AN 90-221776 & JP-A-2 151 635 (BANDO CHEM IND) 11. Juni 1990

## Beschreibung

Die Erfindung bezieht sich auf ein Kettenglied für eine Scharnierbandkette nach dem Oberbegriff des Anspruches 1.

Aus der US-A - 2 792 928 ist ein Kettenglied für eine Scharnierbandkette als Förderkette für Gegenstände mit einer biegesteilen Platte und daran angeordneten Scharnieraugen bekannt, wobei der mit der Platte lösbar verbundene Träger an seiner Oberseite mit einer elastischen Schicht aus Gummi versehen ist. Diese elastische Schicht ist auf den Träger aufvulkanisiert. Die Herstellung der Verbindung zwischen Gummi und dem Träger ist kostenintensiv. Zunächst ist ein Mischungsrohling herzustellen, was einen separaten Fertigungsvorgang darstellt. Dann erfolgt das Aufbringen des Haftmittels auf den Träger mit anschließendem Auflegen des Mischungsrohlings auf den Träger, wobei auf die Einhaltung der seitlichen und stirnseitigen Abstände zum Träger zu achten ist. Zum Schluß folgt der Vulkanisationsprozeß unter Druck und Temperatur. Nachteilig ist der erhebliche Montageaufwand bei verschleißbedingtem Ersatz der gummierten Kettenglieder.

Die Aufgabe der Erfindung besteht darin, ein kostengünstiges Kettenglied für eine Scharnierbandkette zu schaffen.

Die Erfindung löst diese Aufgabe gemäß dem kennzeichnenden Merkmal des Anspruches 1. Vorteilhafte Weiterbildungen der Erfindung sind den Unteransprüchen zu entnehmen.

Wesentlich ist für die Erfindung, daß aufgrund der erfindungsgemäßen Schicht Steigungsabschnitte von 10 bis 15° innerhalb der Förderkette zur Beförderung von Transportgütern möglich sind. Weiter zeichnet sich die Förderbandkette durch hohe Geräuschdämpfung, lange Lebensdauer, kostengünstige Herstellung und geringes Gewicht aus.

Zur Herstellung einer standfesten Bindung zwischen der elastischen Schicht und ihrem aus Kunststoff bestehenden Untergrund, wird ein Haftmittel nicht benötigt. Die Haftung zwischen der Schicht und ihrem Untergrund, wie Kettenglied oder Zwischenträger, beruht auf einer molekularen Bindung.

Die Erfindung ist anhand in der Zeichnung dargestellter Ausführungsbeispiele näher erläutert. Es zeigt
- Figur 1: ein Kettenglied einer Förderkette
- Figur 2: das Kettenglied nach Figur 1 in der Seitenansicht und
- Figur 3: ein weiteres Kettenglied
Nach den Figuren 1 und 2 besteht eine Förderkette 1 aus Kettengliedern 2,3. Jedes Kettenglied 2,3 besteht aus einer Platte 4 aus Stahl mit Scharnieraugen 5,6, wobei ein Bolzen 7 die Kettenglieder 2,3 gelenkig miteinander verbindet.

Auf den Platten 4 sitzt ein Träger 10 aus einem geeigneten Kunststoff. Der Träger 10 weist an seiner Oberseite eine elastische Schicht 11 aus einem gummiähnlichen, thermoplastischen Elastomer (TPE) auf. Diese Schicht 11 ist direkt auf den Träger 10 aufgespritzt. Die Haftung zwischen der Schicht 11 und dem Träger 10 beruht auf einer molekularen Bindung zwischen dem Träger 10 und der Schicht 11. Dadurch liegt eine hochfeste Verbindung vor.

Der Träger 10 ist auf die Platte 4 aufgeklipst. Hierzu weist der Träger 10 beidseitig Arme 15 mit Nasen 16 auf, wobei die Arme 15 mit einem elastischen Halsbereich 17 versehen sind. Zur Montage des mit der Schicht 11 komplettierten Trägers 10 wird der Träger 10 in Richtung des Pfeiles 20 auf die Platte 4 aufgeklipst. Zur Demontage des Trägers 10 von der Platte 4 werden die Arme 15 in nicht gezeigter Weise auseinandergespreizt.

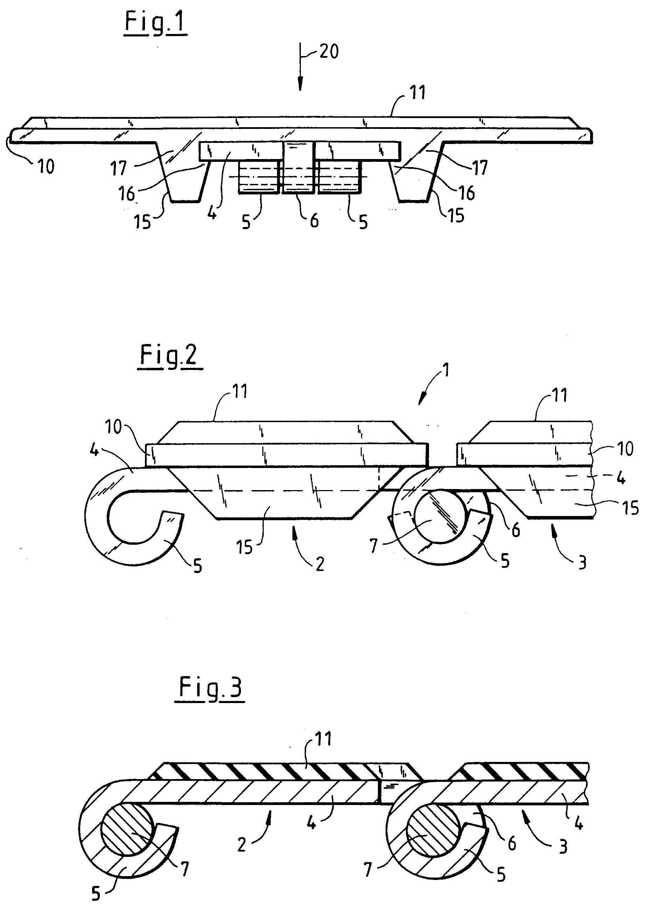

Nach Figur 3 ist bei einer Förderkette 8 die Schicht 11 direkt auf Kettenglieder 2, 3 aufgespritzt. Auch hier liegt eine hochfeste Verbindung zwischen der Schicht 11 und dem Kettenglied 2, 3 vor.

Der Träger 10 und die Kettenglieder 2, 3 bestehen aus Polypropylen.

## Patentansprüche

1. Kettenglied (2, 3) für eine Scharnierbandkette als Förderkette (1) für Gegenstände mit einer biegesteifen Platte (4) bzw. einem mit der Platte (4) lösbar verbundenen Träger (10) und an der Platte angeordneten Scharnieraugen (5, 6), wobei der Träger (10) an seiner Oberseite mit einer elastischen Schicht (11) versehen ist,
dadurch gekennzeichnet,
daß die elastische Schicht (11) aus einem gummiähnlichen thermoplastischen Elastomer (TPE) besteht, wobei der mit ihr verbundene Träger (10) oder das mit ihr verbundene Kettenglied (2, 3) aus einem Kunststoff wie Polypropylen hergestellt sind.

2. Kettenglied nach Anspruch 1,
dadurch gekennzeichnet,
daß die elastische Schicht (11) festhaftend aufgespritzt ist und unmittelbar mit dem Träger (10) verbunden ist.

3. Kettenglied nach Anspruch 1,
dadurch gekennzeichnet,
daß der Träger (10) mit der Platte (4) formschlüssig verbunden ist, indem der Träger (10) Anne (15) mit Nasen (16) aufweist, die die Platte (4) form- und kraftschlüssig umgreifen.

4. Kettenglied nach Anspruch 3,
dadurch gekennzeichnet,
daß die Arme (15) zwecks Aufklipsen auf die Platte (4) einen elastischen Halsbereich aufweisen.

## Claims

1. Chain link (2, 3) for a hinge joint chain as conveying chain (1) for objects, having a rigid plate (4) or a support (10) detachably connected with the plate (4) and hinge eyes (5, 6) located on the plate, the support (10) being provided on its upper side with an elastic layer (11),
characterized in that
the elastic layer (11) is made of a rubber-like thermoplastic elastomer (TPE), the support (10) connected with it or the chain link (2, 3) connected with it being made of a synthetic material, such as polypropylene.

2. Chain link according to Claim 1,
characterized in that
the elastic layer (11) is adhesively sprayed on and is directly connected with the support (10).

3. Chain link according to Claim 1,
characterized in that
the support (10) is form-fitted to the plate (4), in that the support (10) has arms (15) with lugs (16) which surround the plate (4) in a form-fitted and non-positive way.

4. Chain link according to Claim 3,
characterized in that
the arms (15) have an elastic neck region for the purpose of clipping onto the plate (4).

## Revendications

1. Maillon de chaîne (2, 3) pour une chenille à charnières servant de chaîne de convoyeur (1) pour objets avec une plaque (4) rigide à la flexion ou un support (10) relié de manière amovible avec la plaque (4) et des oeillets de charnière (5, 6) places sur la plaque, le support (10) étant pourvu sur sa face supérieure d'une couche (11) élastique,
caractérisé
en ce que la couche élastique (11) est en élastomère thermoplastique (TPE) semblable à du caoutchouc, le support (10) relié à celle-ci ou le maillon de chaîne (2, 3) relié à celle-ci étant réalisé dans une matière plastique telle que du propylène.

2. Maillon de chaîne selon la revendication 1,
caractérisé
en ce que la couche élastique (11) y est rapportée par pulvérisation de manière à adhérer fermement et est directement reliée au support (10).

3. Maillon de chaîne sel on la revendication 1,
caractérisé
en ce que le support (10) est relié par concordance de forme à la plaque (4), en ce que le support (10) comporte des bras (15) avec des ergots (16), qui entourent la plaque (4) par concordance de forme et par force.

4. Maillon de chaîne selon la revendication 3,
caractérisé
en ce que les bras (15) présentent une zone de col élastique pour clipsage sur la plaque (4).
